# EUROPÄISCHE PATENTSCHRIFT

(11) **EP 3 289 853 B1**
(45) Veröffentlichungstag und Bekanntmachung des Hinweises auf die Patenterteilung: **27.03.2019**
(21) Anmeldenummer: 17188213.7
(22) Anmeldetag: 28.08.2017
(51) Int. Cl.: A01D 90/02, A01D 90/12, A01D 43/07, B60J 7/00

(54) **VERFAHREN UND STEUERUNGSEINRICHTUNG ZUM BETREIBEN EINES LANDWIRTSCHAFTLICHEN TRANSPORTWAGENS SOWIE TRANSPORTWAGEN**
METHOD AND CONTROL DEVICE FOR OPERATING AN AGRICULTURAL TRANSPORT VEHICLE AND TRANSPORT VEHICLE
PROCÉDÉ ET DISPOSITIF DE COMMANDE DESTINÉS AU FONCTIONNEMENT D'UN VÉHICULE DE TRANSPORT AGRICOLE ET VÉHICULE DE TRANSPORT

(30) Priorität: 02.09.2016 DE 102016116461
(43) Veröffentlichungstag der Anmeldung: 07.03.2018
(73) Patentinhaber: CLAAS Saulgau GmbH, 88348 Bad Saulgau (DE)
(72) Erfinder: Sauter, Stefan, 88529 Zwiefalten (DE); Frank, Kornelius, 71287 Weissach (DE)

(56) Entgegenhaltungen:
- WO-A1-2011/077316
- WO-A1-2012/033403
- DE-A1-102004 011 789
- DE-U1-202016 104 858

## Beschreibung

Die Erfindung betrifft ein Verfahren zum Betreiben eines landwirtschaftlichen Transportwagens nach dem Oberbegriff des Anspruchs 1. Des Weiteren betrifft die Erfindung eine Steuerungseinrichtung zum Betreiben eines landwirtschaftlichen Transportwagens und einen landwirtschaftlichen Transportwagen.

Ein landwirtschaftlicher Transportwagen, bei welchem es sich um von einem Zugfahrzeug gezogenen Transportwagen oder auch um einen selbstfahrenden Transportwagen handeln kann, verfügt über einen Laderaum, welcher der Aufnahme von Erntegut dient. Der Laderaum des Transportwagens wird von einer Vorderwand des Transportwagens, einer Rückwand des Transportwagens, sich zwischen der Vorderwand und der Rückwand erstreckenden Seitenwänden des Transportwagens und einer Bodenwand desselben begrenzt. An einer Oberseite des Transportwagens gegenüberliegend zur Bodenwand desselben verfügt ein Transportwagen über eine sogenannte Laderaumabdeckung. Dann, wenn der Transportwagen beladen werden soll, ist die Laderaumabdeckung geöffnet. Dann hingegen, wenn der Transportwagen vollständig beladen ist und zum Beispiel auf einer Straße zu einer Sammelstelle für das Erntegut transportiert werden soll, ist die Laderaumabdeckung typischerweise geschlossen.

Beim Beladen des landwirtschaftlichen Transportwagens ausgehend von einem Erntefahrzeug, wie zum Beispiel ausgehend von einem Feldhäcksler, sind sowohl das Erntefahrzeug als auch der Transportwagen in Bewegung. Um möglichst wenig Erntegut beim Beladevorgang zu verlieren und den Transportwagen möglichst effektiv zu beladen, muss während des Beladevorgangs der Fahrer des Erntefahrzeugs stetig die Relativposition zum Transportwagen überwachen und entsprechend die Auswurfrichtung eines Auswurfkrümmers des Erntefahrzeugs anpassen. Dabei ist die Beladung des Transportwagens stark vom Geschick des Fahrers des Erntefahrzeugs abhängig.

Aus der DE 10 2004 011 789 A1 ist es bekannt, einen landwirtschaftlichen Transportwagen ausgehend von einem Erntefahrzeug zu beladen. Dabei wird eine Sensiervorrichtung vorgeschlagen, mit Hilfe derer der Abstand des Transportwagens zum Erntefahrzeug erfasst werden kann, um die Beladung des Transportwagens ausgehend vom Erntefahrzeug effektiver zu gestalten.

WO 2011/077316 A1 offenbart eine Steuerungseinheit zum Öffnen als auch zum Schließen einer Laderaumabdeckung eines landwirtschaftlichen Fahrzeugs.

Aus WO 2012/033403 A1 ist ein landwirtschaftliches Fahrzeug, wie ein Kipper oder ein Silage-Anhänger, mit einer Laderaumabdeckung bekannt, wobei die Laderaumabdeckung einen Presskörper aufweist und zwischen einer Schließposition und einer geöffneten Position verstellt werden kann.

Es besteht Bedarf an einem Verfahren zum Betreiben eines landwirtschaftlichen Transportwagens, an einer Steuerungseinrichtung zur Durchführung des Verfahrens und an einem Transportwagen, mit Hilfe deren der Beladevorgang verbessert werden kann.

Hiervon ausgehend liegt der vorliegenden Erfindung die Aufgabe zugrunde, ein neuartiges Verfahren zum Betreiben eines landwirtschaftlichen Transportwagens, eine entsprechende Steuerungseinrichtung und einen Transportwagen zu schaffen.

Diese Aufgabe wird durch ein Verfahren zum Betreiben eines landwirtschaftlichen Transportwagens nach Anspruch 1 gelöst.

Erfindungsgemäß wird eine Öffnungsstellung der Laderaumabdeckung abhängig von einer Relativposition zwischen dem Transportwagen und dem Erntefahrzeug gewählt.

Mit der hier vorliegenden Erfindung wird erstmals vorgeschlagen, die Laderaumabdeckung eines landwirtschaftlichen Transportwagens als Befüllhilfe beim Beladen des Transportwagens zu nutzen. Die Öffnungsstellung der Laderaumabdeckung wird abhängig von einer Relativposition zwischen dem Transportwagen und dem Erntefahrzeug gewählt. Dabei kann die Laderaumabdeckung abhängig von der Relativposition zwischen dem Transportwagen und dem Erntefahrzeug eine individuell angepasste Öffnungsstellung einnehmen, wodurch die Treffsicherheit für das Erntegut während der Beladung des Transportwagens ausgehend vom Erntefahrzeug erhöht und demnach die Beladung des Transportwagens effektiver gestaltet werden kann. Ferner kann der Fahrer des Erntefahrzeugs entlastet werden.

Gemäß der Erfindung wird dann, wenn das Erntefahrzeug sich seitlich neben dem Transportwagen befindet, für das Beladen des Transportwagens eine Öffnungsstellung der Laderaumabdeckung gewählt, in der ein Segment der Laderaumabdeckung, das an einer von dem Erntefahrzeug abgewandten Seitenwand des Transportwagens angelenkt ist, derart teilweise geöffnet ist, dass eine Projektionsfläche für das vom Erntefahrzeug aus zu beladende Erntegut vergrößert ist. In dieser Öffnungsstellung ist das Segment der Laderaumabdeckung, das an der vom Erntefahrzeug abgewandten Seitenwand angelenkt ist, oberhalb derselben positioniert und in Richtung auf eine dem Erntefahrzeug zugewandte Seitenwand geneigt. Vorzugsweise ist in dieser Öffnungsstellung ein Segment der Laderaumabdeckung, das an der dem Erntefahrzeug zugewandten Seitenwand des Transportwagens angelenkt ist, zumindest so weit geöffnet, dass dasselbe seitlich neben der dem Erntefahrzeug zugewandten Seitenwand positioniert ist. Diese Weiterbildung der Erfindung ermöglicht in einem sogenannten seitlichen Fahrbetrieb des Transportwagens, in welche derselbe an einer Seite des Erntefahrzeugs neben demselben fährt, besonders effektiv gestaltet werden.

Erfindungsgemäß wird dann, wenn der Transportwagen sich hinter dem Erntefahrzeug befindet, für das Beladen des Transportwagens eine Öffnungsstellung der Laderaumabdeckung gewählt, in der sich an gegenüberliegenden Seitenwänden des Transportwagens angelenkte Segmente der Laderaumabdeckung derart teilweise geöffnet sind, dass dieselben oberhalb der Seitenwände des Transportwagens positioniert sind und sich an dieselben trichterförmig anschließen. In dieser Öffnungsstellung divergieren die Segmente der Laderaumabdeckung ausgehend von dem an die Seitenwände angelenkten Enden in Richtung auf gegenüberliegende Enden derselben. Nach dieser Weiterbildung der Erfindung kann das Beladen des Transportwagens dann, wenn derselbe in einem sogenannten Anhäckselbetrieb hinter dem Erntefahrzeug fährt, besonders effektiv gestaltet werden.

Die Steuerungseinrichtung zum Betreiben des landwirtschaftlichen Transportwagens ist in Anspruch 8 definiert. Der landwirtschaftliche Transportwagen ist in Anspruch 9 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigen:
- Fig. 1: eine Draufsicht auf ein landwirtschaftliches Zuggespann bestehend aus einem landwirtschaftlichen Transportwagen und einem landwirtschaftlichen Zugfahrzeug zusammen mit einem Erntefahrzeug, welches den landwirtschaftlichen Transportwagen belädt;
- Fig. 2: eine Seitenansicht des landwirtschaftlichen Zuggespanns bestehend aus dem landwirtschaftlichen Transportwagen und dem landwirtschaftlichen Zugfahrzeug;
- Fig. 3 bis 7: unterschiedliche Positionen einer Laderaumabdeckung des landwirtschaftlichen Transportwagens; und
- Fig. 8 und 9: die Positionen der Laderaumabdeckung gemäß Fig. 4 und 7 zusammen mit einem Ende eines Auswurfkrümmers des Erntefahrzeugs.

Die Erfindung betrifft ein Verfahren zum Betreiben eines landwirtschaftlichen Transportwagens. Ferner betrifft die Erfindung eine Steuerungseinrichtung zur Durchführung des Verfahrens sowie einen landwirtschaftlichen Transportwagen.

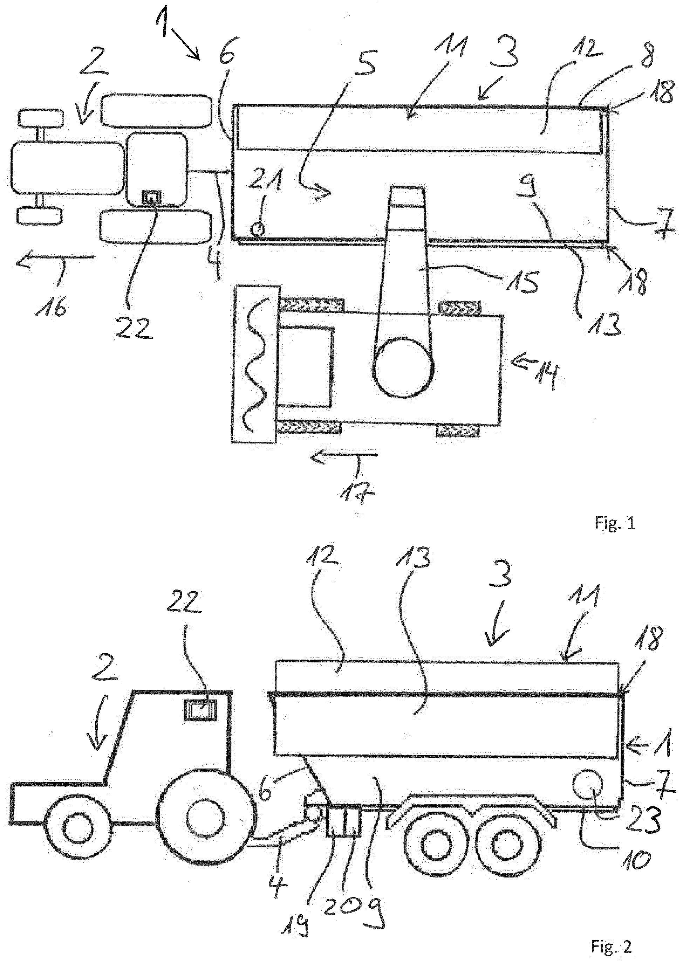

Fig. 1 und 2 zeigen schematisiert ein Zuggespann 1 aus einem Zugfahrzeug 2 und einem vom Zugfahrzeug 2 gezogenen, landwirtschaftlichen Transportwagen 3. Dabei ist der Transportwagen 3 über eine Deichsel, vorzugsweise über eine sogenannte Knickdeichsel 4, an das Zugfahrzeug 2 angekoppelt und vom Zugfahrzeug 2 bewegbar. Der Pfeil 16 der Fig. 1 verdeutlicht die Bewegungsrichtung des Zuggespanns 1 und damit des landwirtschaftlichen Transportwagens 3.

Obwohl Fig. 1 und Fig. 2 einen von einem Zugfahrzeug 2 gezogenen, landwirtschaftlichen Transportwagen 3 zeigen, ist die Erfindung nicht auf solche Transportwagen beschränkt. Die Erfindung kann auch bei selbstfahrenden Transportwagen zum Einsatz kommen.

Der landwirtschaftliche Transportwagen 3 verfügt über einen Laderaum 5, der von einer Vorderwand 6, einer Rückwand 7, Seitenwänden 8 und 9 sowie einer Bodenwand 10 begrenzt ist. Gegenüberliegend zur Bodenwand 10 weist der Transportwagen 3 eine Laderaumabdeckung 11 auf, wobei die Laderaumabdeckung 11 dann, wenn der Laderaum 5 des Transportwagens 3 ausgehend von einem Erntefahrzeug 14 beladen werden soll, eine Öffnungsstellung einnimmt.

Fig. 1 zeigt das Erntefahrzeug 14, welches einen Auswurfkrümmer 15 aufweist, wobei der Auswurfkrümmer 15 dem Beladen des Laderaums 5 des Transportwagens 3 dient. In Fig. 1 wird das Erntefahrzeug 14 seitlich neben dem Transportwagen 3 in der durch den Pfeil 17 gezeigten Ernterichtung bewegt.

Die Laderaumabdeckung 11 verfügt über Segmente 12, 13. Ein erstes Segment 12 ist an einer ersten Seitenwand 8, nämlich an einem oberen Abschnitt der ersten Seitenwand 8 angelenkt, wohingegen ein zweites Segment 13 der Laderaumabdeckung 11 an der gegenüberliegenden zweiten Seitenwand 9 ebenfalls wiederum an einem oberen Abschnitt derselben angelenkt ist.

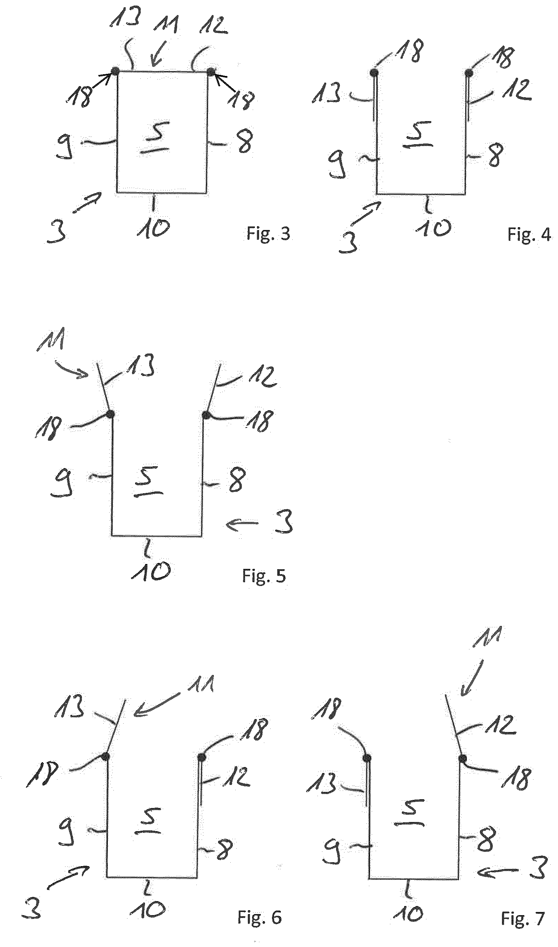

Fig. 3 zeigt die beiden Segmente 12, 13 der Laderaumabdeckung 11 in einer Stellung, in welcher die Laderaumabdeckung 11 vollständig geschlossen ist. Fig. 3 zeigt demnach eine Schließstellung der Laderaumabdeckung 11. In dieser Schließstellung erstrecken sich die Segmente 12, 13 der Laderaumabdeckung 11 in etwa parallel bzw. parallel zur Bodenwand 10.

Fig. 4 zeigt eine aus der Praxis bekannte Öffnungsstellung der Laderaumabdeckung 11 mit den Segmenten 12, 13, wobei in Fig. 4 beide Segmente 12, 13 der Laderaumabdeckung 11 derart vollständig geöffnet sind, dass jedes der Segmente 12, 13 gegenüber der Schließstellung der Fig. 3 um in etwa 270° bzw. um 270° in eine Position geschwenkt ist, in welcher das jeweilige Segment 12, 13 sich seitlich neben der jeweiligen Seitenwand 8, 9 befindet. Nach der Praxis wird die in Fig. 4 gezeigte Öffnungsstellung der Laderaumabdeckung 11 für jeden möglichen Ladebetrieb des Transportwagens 3 gewählt, also unabhängig von der Relativposition zwischen dem Transportwagen 3 und dem Erntefahrzeug 14.

Erfindungsgemäß wird vorgeschlagen, eine Öffnungsstellung der Laderaumabdeckung 11 abhängig von der Relativposition zwischen dem Transportwagen 3 und dem Erntefahrzeug 14 zu wählen. Dabei wird insbesondere abhängig von der Relativposition zwischen dem Transportwagen 3 und dem Erntefahrzeug 14 eine der in Fig. 5, 6 und 7 gezeigten, neuartigen Öffnungsstellungen der Laderaumabdeckung 11 gewählt, wodurch dann die Laderaumabdeckung 11 als Befüllhilfe während der Beladung des Transportwagens 3 ausgehend vom Erntefahrzeug 14 dient. Damit kann die Treffsicherheit des Auswurfkrümmers 15 erhöht und die Beladung Transportwagens 3 mit Erntegut ausgehend vom Erntefahrzeug 14 gesteigert werden.

Dann, wenn das Erntefahrzeug 14 seitlich neben dem Transportwagen 3 fährt und sich damit während des Beladevorgangs seitlich neben dem Transportwagen 3 befindet, wird für das Beladen des Transportwagens 3 eine der Öffnungsstellungen der Laderaumabdeckung 11 gemäß Fig. 6 oder Fig. 7 gewählt, und zwar abhängig davon, auf welcher Seite des Transportwagens 3 sich das Erntefahrzeug 14 befindet.

Befindet sich das Erntefahrzeug 14 seitlich neben der Seitenwand 9 (siehe Fig. 1), so wird die Öffnungsstellung der Fig. 7 gewählt (siehe Fig. 1, 2).

Befindet sich hingegen das Erntefahrzeug 14 seitlich neben der Seitenwand 8 des Transportwagens 3, so wird die Öffnungsstellung der Fig. 6 gewählt.

Dann, wenn das Erntefahrzeug 14 sich demnach seitlich neben dem Transportwagen 3 befindet, wird für das Beladen des Transportwagens 3 eine Öffnungsstellung der Laderaumabdeckung 11 gewählt, in der das Segment 12 bzw. 13 der Laderaumabdeckung 11, das an der von dem Erntefahrzeug 14 abgewandten Seitenwand 8 bzw. 9 des Transportwagens 3 angelenkt ist, derart teilweise geöffnet ist, dass eine Projektionsfläche für das vom Erntefahrzeug 14 aus in den Laderaum 5 zu beladende Erntegut vergrößert ist. In dieser Öffnungsstellung ist das Segment 12 bzw. 13 der Laderaumabdeckung 11, das an der vom Erntefahrzeug 14 abgewandten Seitendwand 8 bzw. 9 angelenkt ist, oberhalb dieser Seitenwand 8 bzw. 9 positioniert und in Richtung auf die dem Erntefahrzeug 14 zugewandte Seitenwand geneigt.

Ferner ist in dieser Öffnungsstellung das andere Segment 13 bzw. 12 der Laderaumabdeckung 11, das an der dem Erntefahrzeug zugewandten Seitenwand 9 bzw. 8 des Transportwagens 3 angelenkt ist, zumindest soweit geöffnet, dass dasselbe sich seitlich neben der dem Erntefahrzeug 14 zugewandten Seitenwand 9 positioniert ist, vorzugsweise ist hierbei das an der dem Erntefahrzeug zugewandten Seitenwand 9 bzw. 8 des Transportwagens 3 angelenkte Segment 13 bzw. 12 der Laderaumabdeckung 11 vollständig geöffnet.

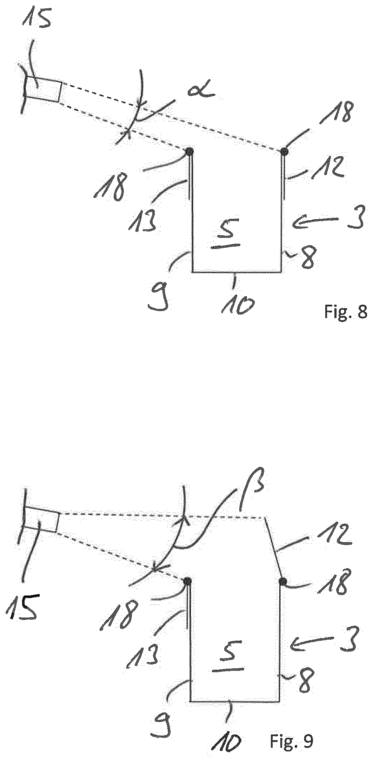

Einem Vergleich der Fig. 8 und 9, wobei Fig. 8 die aus dem Stand der Technik bekannte Öffnungsstellung der Laderaumabdeckung 11 und Fig. 9 eine der neuartigen Öffnungsstellungen der Laderaumabdeckung 11 zeigt, kann entnommen werden, dass nach dem Stand der Technik eine durch den Winkel α definierte Projektionsfläche für das vom Erntefahrzeug 14 aus zu beladende Erntegut vorliegt, wohingegen unter Nutzung der neuartigen Öffnungsstellung der Fig. 9 eine deutlich größere Projektionsfläche vorliegt, die durch den Winkel β definiert ist. Hierdurch kann der Beladevorgang des Transportwagens deutlich effektiver gestaltet werden.

Dann, wenn in einem sogenannten Anhäckselbetrieb sich der Transportwagen 3 hinter dem Erntefahrzeug 14 befindet, wird für das Beladen des Transportwagens 3 die in Fig. 5 gezeigte Öffnungsstellung der Laderaumabdeckung 11 gewählt, in der die sich an gegenüberliegenden Seitenwänden 8 und 9 angelenkten Segmente 12, 13 der Laderaumabdeckung 11 teilweise geöffnet sind, und zwar derart, dass sich dieselben oberhalb der Seitenwände 8, 9 des Transportwagens 3 befinden und sich an dieselben trichterförmig anschließen. In dieser Öffnungsstellung divergieren die Segmente 12, 13 der Laderaumabdeckung 11 ausgehend von den an die Seitenwände 8, 9 angelegten Enden derselben in Richtung auf gegenüberliegende Enden der Segmente 12, 13. Hiermit kann auch im sogenannten Anhäckselbetrieb dann, wenn der Transportwagen 3 hinter dem Erntefahrzeug 14 fährt bzw. sich hinter dem Erntefahrzeug 14 befindet, der Beladevorgang besonders effektiv gestaltet werden, nämlich durch Nutzen der Laderaumabdeckung 11 als Beladehilfe bzw. Befüllhilfe.

Die jeweilige Öffnungsstellung der Laderaumabdeckung 11, die abhängig von der Relativposition zwischen dem Transportwagen 3 und dem Erntefahrzeug 14 während des Beladevorgangs gewählt wird, kann entweder bedienerseitig ausgewählt werden, insbesondere vom Fahrer des Transportwagens 3, alternativ kann die Öffnungsstellung der Laderaumabdeckung 11 auch automatisch ausgewählt werden. Fig. 1 und 2 zeigen ein Bedienterminal 22 des Zugfahrzeugs 2, über den bedienerseitig die Auswahl der Öffnungsstellung der Laderaumabdeckung 11 gewählt werden kann.

Die automatische Auswahl der Öffnungsstellung der Laderaumabdeckung 11 kann zum Beispiel dadurch erfolgen, dass der Transportwagen 3 einen Sensor 23 aufweist, mit Hilfe dessen die Relativposition zwischen dem Transportwagen 3 und dem Erntefahrzeug 14 erfasst werden kann. Bei diesem Sensor 23 kann es sich zum Beispiel um eine Kamera, einen Ultraschall-, Laser-, Radarsensor oder dergleichen handeln.

Unabhängig davon, wie die von der Relativposition zwischen den Transportwagen 3 und dem Erntefahrzeug 14 abhängige Öffnungsstellung der Laderaumabdeckung 11 ausgewählt wird, wird dieselbe vorzugsweise automatisch eingestellt.

Zur Einstellung der von der Relativposition zwischen dem Transportwagen 3 und dem Erntefahrzeug 14 abhängigen Öffnungsstellung der Laderaumabdeckung 11 ist jedem Segment 12, 13 der Laderaumabdeckung 11 ein Antrieb 18 zugeordnet, mit Hilfe dessen das jeweilige Segment 12, 13 der Laderaumabdeckung 11 verlagert werden kann. Bei diesen Antrieben 18 handelt es sich vorzugsweise um Hydraulikantriebe, die ausgehend von einem Hydraulikblock 20 aus mit Hydrauliköl versorgt werden können, um so die Segmente 12, 13 der Laderaumabdeckung 11 hydraulisch zu verlagern und in ihrer definierten Öffnungsstellung zu halten.

Die Ansteuerung des Hydraulikblocks 20 erfolgt ausgehend von einer Steuerungseinrichtung 19 des Transportwagens 3. Bei dieser Steuerungseinrichtung 19 handelt es sich vorzugsweise um eine elektronische Steuerungseinrichtung, die Mittel zur Durchführung des oben beschriebenen Verfahrens umfasst. Bei diesen Mitteln handelt es sich um hardwareseitige Mittel und um softwareseitige Mittel.

Bei den hardwareseitigen Mitteln handelt es sich um einen Prozessor zur Datenverarbeitung, einen Speicher zur Datenspeicherung und um Schnittstellen zum Datenaustausch mit den an der Durchführung des erfindungsgemäßen Verfahrens beteiligten Baugruppen, insbesondere mit den Antrieben 18 der Segmente 12, 13 der Laderaumabdeckung 11. Bei den softwareseitigen Mitteln handelt es sich um Programmbausteine.

Die Steuerungseinrichtung 19 führt das erfindungsgemäße Verfahren steuerungsseitig aus. Die Steuerungseinrichtung 19 steuert demnach abhängig von der Relativposition zwischen dem Transportwagen 3 und dem Erntefahrzeug 14 die Antriebe 18 der Laderaumabdeckung 11, nämlich der Segmente 12, 13 der Laderaumabdeckung 11, zur Bereitstellung der jeweiligen von der Relativposition zwischen dem Transportwagen 3 und dem Erntefahrzeug 14 abhängigen Öffnungsstellung der Laderaumabdeckung 11 an.

Fig. 1 zeigt weiterhin einen dem Segment 13 der Laderaumabdeckung 11 zugeordneten Sensor 21, mit Hilfe dessen die Position dieses Segments 13 der Laderaumabdeckung 11 erfasst werden kann. Auch dem Segment 12 der Laderaumabdeckung 11 ist ein derartiger Sensor 21 zugeordnet, der jedoch in Fig. 1 von dem Segment 12 abgedeckt und daher nicht sichtbar ist. Die Kenntnis der Position der Segmente 12, 13 der Laderaumabdeckung 11 ist zur Ansteuerung derselben nötig, um die gewünschte Öffnungsstellung der Laderaumabdeckung 11 exakt einzustellen. Alternativ kann die Position der Segmente 12, 13 über die Erfassung der Zeit erfolgen in welcher sie eine Schwenkbewegung ausführen. Ausgehend von einer bekannten Ausgangsposition kann über die Dauer, Geschwindigkeit sowie die Richtung der Schwenkbewegung die Position der Segmente 12, 13 berechnet werden. Sofern die Segmente 12, 13 über Hydraulikaktuatoren betätigt werden, könnte über das Volumen des Hydraulikfluids, welches für eine Schwenkbewegung benötigt wurde, auf die jeweilige Position geschlossen werden.

Die Segmente 12, 13 der Laderaumabdeckung 11 können alternativ durch elektrische Antriebe verlagert bzw. betätigt werden.

Mit der Erfindung kann der Fahrer des Erntefahrzeugs 14 entlastet werden. Ferner kann der Fahrer des Transportwagens 3 entlastet werden. Der gesamte Beladevorgang des Transportwagens 3 ausgehend vom Erntefahrzeug 14 kann effektiver gestaltet werden. Beim Beladen geht weniger Erntegut verloren, die Verschmutzung des Transportwagens 3 wird reduziert. Ferner kann eine bessere, gleichmäßigere Beladung des Transportwagens 3 gewährleistet werden. Das Ladevolumen des Laderaums 5 kann optimal ausgenutzt werden. Die Anzahl von Transporten zwischen dem Feld, in welchem das Erntegut geerntet wird, und einem Sammelplatz für das Erntegut kann reduziert werden. Dadurch kann vorteilhaft Treibstoff eingespart und der Schadstoffaustrag vermindert werden.

### Bezugszeichenliste

- 1: Zuggespann
- 2: Zugfahrzeug
- 3: Transportwagen
- 4: (Knick-)Deichsel
- 5: Laderaum
- 6: Vorderwand
- 7: Rückwand
- 8: Seitenwand
- 9: Seitenwand
- 10: Bodenwand
- 11: Laderaumabdeckung
- 12: Segment
- 13: Segment
- 14: Erntefahrzeug
- 15: Auswurfkrümmer
- 16: Fahrtrichtung
- 17: Fahrtrichtung
- 18: Antrieb
- 19: Steuerungseinrichtung
- 20: Hydraulikblock
- 21: Sensor
- 22: Bedienterminal
- 23: Sensor

## Patentansprüche

1. Verfahren zum Betreiben eines von einem Zugfahrzeug (2) gezogenen oder eines selbstfahrenden landwirtschaftlichen Transportwagens (3), wobei ein Laderaum (5) des Transportwagens (3) bei einer geöffneten Laderaumabdeckung (11) des Transportwagens (3) von einem neben dem Transportwagen (3) fahrenden Erntefahrzeug (14) aus mit Erntegut beladen wird und der Laderaum (5) von einer Vorderwand (6), einer Rückwand (7), Seitenwänden (8, 9) sowie einer Bodenwand (10) begrenzt ist, **dadurch gekennzeichnet, dass** die Laderaumabdeckung (11) über ein erstes an einem oberen Abschnitt der ersten Seitenwand (8) angelenktes Segment (12) sowie über ein zweites an einem oberen Abschnitt der gegenüberliegenden zweiten Seitenwand (9) angelenktes Segment (13) verfügt und eine Öffnungsstellung der Laderaumabdeckung (11) abhängig von einer Relativposition zwischen dem Transportwagen (3) und dem Erntefahrzeug (14) gewählt wird, wobei
dann, wenn das Erntefahrzeug (14) sich seitlich neben dem Transportwagen (3) befindet, für das Beladen des Transportwagens (3) eine Öffnungsstellung der Laderaumabdeckung (11) gewählt wird, in der das Segment (12, 13) der Laderaumabdeckung (11), das an der von dem Erntefahrzeug (14) abgewandten Seitenwand (8) des Transportwagens (3) angelenkt ist, derart teilweise geöffnet ist, dass eine Projektionsfläche für das vom Erntefahrzeug (14) aus zu beladende Erntegut vergrößert ist, und
dann, wenn der Transportwagen (3) sich hinter dem Erntefahrzeug (14) befindet, für das Beladen des Transportwagens (3) ein Öffnungsstellung der Laderaumabdeckung (11) gewählt wird, in der die an den gegenüberliegenden Seitenwänden (8, 9) des Transportwagens (3) angelenkten Segmente (12, 13) der Laderaumabdeckung (11) derart teilweise geöffnet sind, dass sich dieselben oberhalb der Seitenwände (8, 9) des Transportwagens (3) positioniert sind und sich an dieselben trichterförmig anschließen.

2. Verfahren nach Anspruch 1, **dadurch gekennzeichnet, dass** dann, wenn das Erntefahrzeug (14) sich seitlich neben dem Transportwagen (3) befindet, in dieser Öffnungsstellung das Segment (12) der Laderaumabdeckung (11), das an der vom Erntefahrzeug (14) abgewandten Seitenwand angelenkt ist, oberhalb derselben positioniert und in Richtung auf eine dem Erntefahrzeug (14) zugewandte Seitenwand geneigt ist.

3. Verfahren nach Anspruch 1 oder 2, **dadurch gekennzeichnet, dass** in der Öffnungsstellung, bei der das Erntefahrzeug (14) sich seitlich neben dem Transportwagen (3) befindet, das Segment (12, 13) der Laderaumabdeckung (11), das an einer dem Erntefahrzeug (14) zugewandten Seitenwand (9) des Transportwagens (3) angelenkt ist, zumindest soweit geöffnet ist, dass dasselbe seitlich neben der dem Erntefahrzeug (14) zugewandten Seitenwand (9) positioniert ist.

4. Verfahren nach Anspruch 3, **dadurch gekennzeichnet, dass** das an einer dem Erntefahrzeug (14) zugewandten Seitenwand (9) des Transportwagens (3) angelenkte Segment der Laderaumabdeckung (11) vollständig geöffnet ist.

5. Verfahren nach Anspruch 1, **dadurch gekennzeichnet, dass** in der Öffnungsstellung, bei der der Transportwagen (3) sich hinter dem Erntefahrzeug (14) befindet, die Segmente (12, 13) der Laderaumabdeckung ausgehend von den an die Seitenwänden angelenkten Enden derselben in Richtung auf gegenüberliegende Enden derselben divergieren.

6. Verfahren nach einem der Ansprüche 1 bis 5, **dadurch gekennzeichnet, dass** die Öffnungsstellung der Laderaumabdeckung (11) bedienerseitig ausgewählt und automatisch eingestellt wird.

7. Verfahren nach einem der Ansprüche 1 bis 5, **dadurch gekennzeichnet, dass** die Öffnungsstellung der Laderaumabdeckung (11) automatisch ausgewählt und automatisch eingestellt wird.

8. Steuerungseinrichtung zur Durchführung des Verfahrens nach einem der Ansprüche 1 bis 7, wobei dieselbe abhängig von einer Relativposition zwischen dem Transportwagen (3) und dem Erntefahrzeug (14) Antriebe (18) der Segmente (12, 13) der Laderaumabdeckung (11) zur steuerungsseitigen Bereitstellung der jeweiligen Öffnungsstellung der Laderaumabdeckung (11) ansteuert.

9. Landwirtschaftlicher Transportwagen (3), mit einer Laderaumabdeckung (11), und mit einer Steuerungseinrichtung (19) nach Anspruch 8.

10. Landwirtschaftlicher Transportwagen (3) nach Anspruch 9, **dadurch gekennzeichnet, dass** derselbe Antriebe (18) für an gegenüberliegenden Seitenwänden (8, 9) des Transportwagens (3) angelenkte Segmente (12, 13) der Laderaumabdeckung (11) aufweist.

11. Landwirtschaftlicher Transportwagen (3) nach Anspruch 10, **dadurch gekennzeichnet, dass** die Antriebe (18) Hydraulikantriebe sind, die von einem Hydraulikblock (20) aus mit Hydrauliköl versorgbar sind oder elektrische Antriebe sind.

12. Landwirtschaftlicher Transportwagen (3) nach einem der Ansprüche 9 bis 11, **dadurch gekennzeichnet, dass** derselbe mindestens einen Sensor (21) zur Erfassung der Position von an gegenüberliegenden Seitenwänden (8, 9) des Transportwagens (3) angelenkten Segmenten (12, 13) der Laderaumabdeckung (11) aufweist.

13. Landwirtschaftlicher Transportwagen (3) nach einem der Ansprüche 9 bis 12, **dadurch gekennzeichnet, dass** derselbe mindestens einen Sensor (23) zur Erfassung der Relativposition zwischen dem Transportwagen (3) und dem Erntefahrzeug (14) aufweist.

## Claims

1. A method for operating an agricultural transport wagon (3) which is drawn by a tractor vehicle (2) or is self-propelled, wherein, when a loading space cover (11) of the transport wagon (3) is open, a loading space (5) of the transport wagon (3) is loaded with harvested produce from a harvesting vehicle (14) travelling adjacent to the transport wagon (3) and the loading space (5) is delimited by a front wall (6), a rear wall (7), side walls (8, 9) as well as a floor wall (10), **characterized in that** the loading space cover (11) is provided with a first segment (12) articulated to an upper section of the first side wall (8) as well as a second segment (13) articulated to an upper section of the opposing second side wall (9) and an opening position of the loading space cover (11) is selected as a function of a relative position between the transport wagon (3) and the harvesting vehicle (14), wherein when the harvesting vehicle (14) is positioned alongside the transport wagon (3), in order to load the transport wagon (3), an opening position of the loading space cover (11) is selected in which the segment (12, 13) of the loading space cover (11) which is articulated to the side wall (8) of the transport wagon (3) facing away from the harvesting vehicle (14) is partially opened in a manner such that a projection area for the harvested produce to be loaded from the harvesting vehicle (14) is enlarged, and when the transport wagon (3) is positioned behind the harvesting vehicle (14), in order to load the transport wagon (3), an opening position of the space cover (11) is selected in which the segments (12, 13) of the space cover (11) articulated to the opposing side walls (8, 9) of the transport wagon (3) are partially opened in a manner such that they are positioned above the side walls (8, 9) of the transport wagon (3) and are joined thereto in the shape of a funnel.

2. The method as claimed in claim 1, **characterized in that** when the harvesting vehicle (14) is positioned alongside the transport wagon (3), in this opening position the segment (12) of the loading space cover (11) which is articulated on the side wall facing away from the harvesting vehicle (14) is positioned above it and is inclined in the direction of a side wall facing the harvesting vehicle (14).

3. The method as claimed in claim 1 or claim 2, **characterized in that** in the opening position in which the harvesting vehicle (14) is alongside the transport wagon (3), the segment (12, 13) of the loading space cover (11) which is articulated to a side wall (9) of the transport wagon (3) facing the harvesting vehicle (14) is opened up at least widely enough that it is positioned alongside the side wall (9) facing the harvesting vehicle (14).

4. The method as claimed in claim 3, **characterized in that** the segment of the loading space cover (11) articulated to a side wall (9) of the transport wagon (3) facing the harvesting vehicle (14) is fully open.

5. The method as claimed in claim 1, **characterized in that** in the opening position in which the transport wagon (3) is positioned behind the harvesting vehicle (14), the segments (12, 13) of the loading space cover diverge from the ends thereof articulated to the side walls in the direction of the opposite ends thereof.

6. The method as claimed in one of claims 1 to 5, **characterized in that** the opening position of the loading space cover (11) is selected by the operator and adjusted automatically.

7. The method as claimed in one of claims 1 to 5, **characterized in that** the opening position of the loading space cover (11) is selected automatically and adjusted automatically.

8. A control device for carrying out the method as claimed in one of claims 1 to 7 wherein, as a function of a relative position between the transport wagon (3) and the harvesting vehicle (14), power units (18) of the segments (12, 13) of the loading space cover (11) are actuated for controlled provision of the respective opening position of the loading space cover (11).

9. An agricultural transport wagon (3) having a loading space cover (11) and having a control device (19) as claimed in claim 8.

10. The agricultural transport wagon (3) as claimed in claim 9, **characterized in that** it comprises power units (18) for segments (12, 13) of the loading space cover (11) articulated to opposing side walls (8, 9) of the transport wagon (3).

11. The agricultural transport wagon (3) as claimed in claim 10, **characterized in that** the power units (18) are hydraulic power units which can be supplied with hydraulic oil from a hydraulic block (20) or which are electrical power units.

12. The agricultural transport wagon (3) as claimed in one of claims 9 to 11, **characterized in that** it comprises at least one sensor (21) for detecting the position of segments (12, 13) of the loading space cover (11) articulated to opposing side walls (8, 9) of the transport wagon (3).

13. The agricultural transport wagon (3) as claimed in one of claims 9 to 12, **characterized in that** it comprises at least one sensor (23) for detecting the relative position between the transport wagon (3) and the harvesting vehicle (14).

## Revendications

1. Procédé d'exploitation d'une remorque de transport agricole (3) tractée par un véhicule de traction (2) ou automotrice, un espace de chargement (5) de la remorque de transport (3) étant chargé en produit récolté par un véhicule de récolte (14) roulant à côté de la remorque de transport (3) lorsqu'un moyen de recouvrement (11) de la remorque de transport (3) est ouvert, et l'espace de chargement (5) étant limité par une paroi avant (6), par une paroi arrière (7), par des parois latérales (8, 9) ainsi que par une paroi de fond (10), **caractérisé en ce que** le moyen de recouvrement d'espace de chargement (11) dispose d'un premier segment (12) articulé sur une portion supérieure de la première paroi latérale (8) ainsi que d'un second segment (13) articulé sur une portion supérieure de la seconde paroi latérale opposée (9), et une position d'ouverture du moyen de recouvrement d'espace de chargement (11) est choisie en fonction d'une position relative entre la remorque de transport (3) et le véhicule de récolte (14), lorsque le véhicule de récolte (14) se trouve latéralement à côté de la remorque de transport (3), on choisit pour charger la remorque de transport (3) une position ouverte du moyen de recouvrement d'espace de chargement (11) dans laquelle le segment (12, 13) du moyen de recouvrement d'espace de chargement (11) qui est articulé sur la paroi latérale (8) de la remorque de transport (3) située à l'opposé du véhicule de récolte (14) est partiellement ouvert, de façon à augmenter là surface de projection du produit récolté à charger à partir du véhicule de récolte (14), et lorsque la remorque de transport (3) se trouve derrière le véhicule de récolte (14), on choisit pour charger la remorque de transport (3) une position ouverte du moyen de recouvrement d'espace de chargement (11) dans laquelle les segments (12, 13) du moyen de recouvrement d'espace de chargement (11) articulés sur les parois latérales opposées (8, 9) de la remorque de transport (3) sont partiellement ouverts, de façon que ceux-ci soient positionnés au-dessus des parois latérales (8, 9) de la remorque de transport (3) et se raccordent à celles-ci en forme d'entonnoir.

2. Procédé selon la revendication 1, **caractérisé en ce que**, lorsque le véhicule de récolte (14) se trouve latéralement à côté de la remorque de transport (3), le segment (12) du moyen de recouvrement d'espace de chargement (11) qui est articulé sur la paroi latérale située à l'opposé du véhicule de récolte (14) est positionné, dans cette position d'ouverture, au-dessus de celle-ci et est incliné en direction d'une paroi latérale tournée vers le véhicule de récolte (14) .

3. Procédé selon la revendication 1 ou 2, **caractérisé en ce que**, dans la position d'ouverture où le véhicule de récolte (14) se trouve latéralement à côté de la remorque de transport (3), le segment (12, 13) du moyen de recouvrement d'espace de chargement (11) qui est articulé sur une paroi latérale (9) de la remorque de transport (3) tournée vers le véhicule de récolte (14) est au moins ouvert de façon à être positionné latéralement à côté de la paroi latérale (9) tournée vers le véhicule de récolte (14) .

4. Procédé selon la revendication 3, **caractérisé en ce que** le segment du moyen de recouvrement d'espace de chargement (11) articulé sur une paroi latérale (9) de la remorque de transport (3) tournée vers le véhicule de récolte (14) est complètement ouvert.

5. Procédé selon la revendication 1, **caractérisé en ce que** dans la position d'ouverture où la remorque de transport (3) se trouve derrière le véhicule de récolte (14), les segments (12, 13) du moyen de recouvrement d'espace de chargement divergent, à partir des extrémités articulées aux parois latérales de celui-ci, en direction d'extrémités opposées.

6. Procédé selon une des revendications 1 à 5, **caractérisé en ce que** la position d'ouverture du moyen de recouvrement d'espace de chargement (11) est choisie par l'utilisateur et réglée automatiquement.

7. Procédé selon une des revendications 1 à 5, **caractérisé en ce que** la position d'ouverture du moyen de recouvrement d'espace de chargement (11) est choisie automatiquement et réglée automatiquement.

8. Équipement de commande pour mettre en oeuvre le procédé selon une des revendications 1 à 7, celui-ci agissant, en fonction de la position relative entre la remorque de transport (3) et le véhicule de récolte (14), sur des moyens d'entraînement (18) des segments (12, 13) du moyen de recouvrement d'espace de chargement (11) pour obtenir, côté commande, la position d'ouverture correspondante du moyen de recouvrement d'espace de chargement (11).

9. Remorque de transport agricole (3), comprenant un moyen de recouvrement d'espace de chargement (11) et comprenant un équipement de commande (19) selon la revendication 8.

10. Remorque de transport agricole (3) selon la revendication 9, **caractérisée en ce que** celle-ci comporte des moyens d'entraînement (18) pour des segments (12, 13) du moyen de recouvrement d'espace de chargement (11) articulés sur des parois latérales opposées (8, 9) de la remorque de transport (3).

11. Remorque de transport agricole (3) selon la revendication 10, **caractérisée en ce que** les moyens d'entraînement (18) sont des moyens d'entraînement hydrauliques, qui peuvent être alimentés en huile hydraulique à partir d'un bloc hydraulique (20), ou sont des moyens d'entraînement électriques.

12. Remorque de transport agricole (3) selon une des revendications 9 à 11, **caractérisée en ce que** celle-ci comporte au moins un capteur (21) pour détecter la position de segments (12, 13) du moyen de recouvrement d'espace de chargement (11) articulés sur des parois latérales opposées (8, 9) de la remorque de transport (3).

13. Remorque de transport agricole (3) selon une des revendications 9 à 12, **caractérisée en ce que** celle-ci comporte au moins un capteur (23) pour détecter la position relative entre la remorque de transport (3) et le véhicule de récolte (14).
